# EUROPÄISCHE PATENTSCHRIFT

(11) **EP 1 687 348 B1**
(45) Veröffentlichungstag und Bekanntmachung des Hinweises auf die Patenterteilung: **12.11.2008**
(21) Anmeldenummer: 04818789.2
(22) Anmeldetag: 17.11.2004
(51) Int. Cl.: C08F 220/26, C08F 216/14, C11D 1/62

(54) **POLYALKYLENOXIDGRUPPEN UND QUARTÄRE STICKSTOFFATOME ENTHALTENDE COPOLYMERE**
COPOLYMERS COMPRISING POLYALKYLENE OXIDE GROUPS AND QUATERNARY NITROGEN ATOMS
COPOLYMERES DOTES DE GROUPES OXYDE DE POLYALKYLENE ET D'ATOMES D'AZOTE QUATERNAIRE

(30) Priorität: 21.11.2003 US 523663 P
(43) Veröffentlichungstag der Anmeldung: 09.08.2006
(73) Patentinhaber: BASF SE, 67056 Ludwigshafen (DE)
(72) Erfinder: DETERING, Jürgen, 67117 Limburgerhof (DE); PFEIFFER, Thomas, 67459 Böhl-Iggelheim (DE); REDDY, Parmod Kakumanu, West Chester, OH 45069 (US); SONG, Xinbei None, Cincinnati, OH 45242 (US)
(74) Vertreter: Pohl, Michael Friedrich
(86) Internationale Anmeldenummer: PCT/EP2004/013020
(87) Internationale Veröffentlichungsnummer: WO 2005/049676

(56) Entgegenhaltungen:
- WO-A-00/39176
- US-B1- 6 645 476

## Beschreibung

Die vorliegende Erfindung betrifft die Verwendung von Copolymeren, die
(A) 60 bis 99 Gew.-% mindestens eines monoethylenisch ungesättigten Polyalkylenoxidmonomers der allgemeinen Formel I 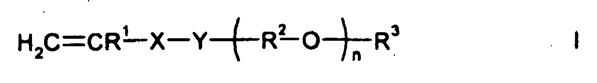 in der die Variablen folgende Bedeutung haben:
   - X: -CH₂- oder -CO-, wenn Y für -O- steht;
   -CO-, wenn Y für -NH- steht;
   - Y: -O- oder -NH-;
   - R¹: Wasserstoff oder Methyl;
   - R²: gleiche oder verschiedene C₂-C₆-Alkylenreste, die linear oder verzweigt sein können und die blockweise oder statistisch angeordnet sein können;
   - R³: Wasserstoff oder C₁-C₄-Alkyl;
   - n: eine ganze Zahl von 3 bis 50,
(B) 1 bis 40 Gew.-% mindestens eines quaternisierten stickstoffhaltigen monoethylenisch ungesättigten Monomers,
(C) 0 bis 39 Gew.-% anionischer monoethylenisch ungesättigter Monomere und
(D) 0 bis 30 Gew.-% anderer nichtionischer monoethylenisch ungesättigter Monomere
einpolymerisiert enthalten und ein mittleres Molekulargewicht M_{w} von 2 000 bis 100 000 aufweisen als Dispergiermittel für Tonmineralien.

Außerdem betrifft die Erfindung neue Copolymere, wie in Anspruch 6 definiert.

Beim Waschprozeß unterscheidet man zwischen Primär- und Sekundärwaschwirkung. Unter Primärwaschwirkung versteht man die eigentliche Schmutzentfernung vom textilen Waschgut. Unter Sekundärwaschwirkung wird die Verhinderung der Effekte verstanden, die durch Wiederablagerung des abgelösten Schmutzes aus der Waschflotte auf das Gewebe zustande kommen. Die Textilien vergrauen zunehmend von Waschgang zu Waschgang, wobei dieser schleichende Vergrauungsprozeß kaum rückgängig gemacht werden kann. Um Textilien aus Baumwolle vor Vergrauung zu schützen, werden dem Waschmittel häufig Natriumsalze der Carboxymethylcellulose (CMC) zugesetzt. Auch Polyacrylsäuren und Acrylsäure-Maleinsäure-Copolymere wirken vergrauungsinhibierend. Die Wirkung der genannten Polymere ist jedoch bei tonhaltigem Schmutz nicht zufriedenstellend.

In der WO-A-93/22358 werden Verdickungs- und Dispergiermittel für kosmetische Zubereitungen beschrieben, die auf Copolymeren aus mindestens 50 Gew.-% eines anionischen Monomers, wie Acrylsäure, und bis zu 50 Gew.-% einer olefinisch ungesättigten quartären Ammoniumverbindung basieren. Die Copolymere können als weiteres Comonomer einen (Meth)Acrylsäureester enthalten, wobei auch (Meth)Acrylsäureester von mit Alkylenoxid umgesetzten Alkoholen als mögliche Comonomere genannt werden. Explizit offenbart werden jedoch nur Copolymere, die Stearylmethacrylat als Comonomer enthalten und dieses auch nur in Mengen von maximal 2,4 Gew.-%.

Aus der WO-A-00/39176 ist die Verwendung von Copolymerisaten von anionischen, kationischen und nichtionischen Monomeren als Verdickungsmittel bzw. Rheologieverbesserer für kosmetische und pharmazeutische Zubereitungen bekannt. (Meth)Acrylsäureester von alkoxylierten Alkoholen werden zwar als mögliche nichtionische Comonomere aufgeführt, es wird jedoch darauf hingewiesen, daß sie nur in geringen Mengen enthalten sein dürfen, da sonst die Glastemperatur der Copolymere erniedrigt wird.

Weiterhin werden in der WO-A-01/05874 zwitterionische Polyamine beschrieben, die durch Alkoxylierung von Polyaminen sowie anschließende Quaternisierung und Sulfatierung erhalten werden und sich zur Entfernung von tonhaltigem Schmutz aus Textilien eignen.

Schließlich sind auch aus der DE-A-100 62 355 Copolymere aus anionischen, kationischen und wasserunlöslichen nichtionischen Monomeren zur Oberflächenbehandlung bekannt. Dementsprechend weisen die genannten nichtionischen Monomere keine Alkylenoxidblöcke auf, und ihr Anteil an den Copolymeren beträgt höchstens 16 Gew.-%.

Die US 6,645,476 B1 beschreibt wasserlösliche Polymere, die durch radikalische Copolymerisation von A) einem oder mehreren Makromonomeren mit polymerisierbarer Endgruppe, einer hydrophilen Einheit auf Basis von Polyalkylenoxiden und einer hydrophoben Einheit, die Wasserstoff oder einen gesättigten oder ungesättigten, linearen oder verzweigten, aliphatischen, cycloaliphatischen oder aromatischen C₁-C₃₀-Kohlenwasserstoffrest aufweist und B) einem oder mehreren olefinisch ungesättigten Comonomeren, die Sauerstoff, Stickstoff, Schwefel, Phosphor, Chlor und/oder Fluor enthalten, erhältlich sind.

Der Erfindung lag die Aufgabe zugrunde, polymere Waschmitteladditive zur Verfügung zu stellen, die sich durch insgesamt vorteilhafte Anwendungseigenschaften auszeichnen, vor allem verbesserte Primär- und Sekundärwaschwirkung aufweisen und sich leicht und stabil in feste und flüssige Waschmittelformulierungen einarbeiten lassen.

Demgemäß wurde die Verwendung von Copolymeren als Dispergiermittel für Tonmineralien gefunden, die
(A) 60 bis 99 Gew.-% mindestens eines monoethylenisch ungesättigten Polyalkylenoxidmonomers der allgemeinen Formel I 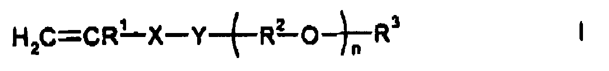 in der die Variablen folgende Bedeutung haben:
   - X: -CH₂- oder -CO-, wenn Y für -O- steht; -CO-, wenn Y für -NH- steht;
   - Y: -O- oder -NH-;
   - R¹: Wasserstoff oder Methyl;
   - R²: gleiche oder verschiedene C₂-C₆-Alkylenreste, die linear oder verzweigt sein können und die blockweise oder statistisch angeordnet sein können;
   - R³: Wasserstoff oder C₁-C₄-Alkyl;
   - n: eine ganze Zahl von 3 bis 50,
(B) 1 bis 40 Gew.-% mindestens eines quaternisierten stickstoffhaltigen monoethylenisch ungesättigten Monomers,
(C) 0 bis 39 Gew.-% anionischer monoethylenisch ungesättigter Monomere und
(D) 0 bis 30 Gew.-% anderer nichtionischer monoethylenisch ungesättigter Monomere
   einpolymerisiert enthalten und ein mittleres Molekulargewicht M_{w} von 2 000 bis 100 000 aufweisen.

Weiterhin wurden neue Copolymere gefunden, wie in Anspruch 6 definiert.

Bevorzugte erfindungsgemäße Copolymere enthalten als einpolymerisierte Komponente (A) monoethylenisch ungesättigte Polyalkylenoxidmonomere der Formel I, in der die Variablen folgende Bedeutung haben;
- X: -CO- oder -CH₂-;
- Y: -O-;
- R¹: Wasserstoff oder Methyl;
- R²: gleiche oder verschiedene blockweise oder statistisch angeordnete lineare oder verzweigte C₂-C₄-Alkylenreste, bevorzugt Ethylen, 1,2- oder 1,3-Propylen oder Mischungen davon, besonders bevorzugt Ethylen;
- R³: Methyl;
- n: eine ganze Zahl von 5 bis 30.

Bei den Monomeren (A) handelt es sich entsprechend Formel I beispielsweise um:
- Umsetzungsprodukte von (Meth)Acrylsäure mit Polyalkylenglykolen, die nicht endgruppenverschlossen, einseitig durch Alkylreste endgruppenverschlossen, einseitig aminiert oder einseitig durch Alkylreste endgruppenverschlossen und einseitig aminiert sind;
- Allylether von Polyalkylenglykolen, die nicht endgruppenverschlossen oder einseitig durch Alkyl-, Phenyl- oder Alkylphenylreste endgruppenverschlossen sind.

Bevorzugte Monomere (A) sind die (Meth)Acrylate und die Allylether, wobei die Acrylate und vor allem die Methacrylate besonders bevorzugt sind.

Als besonders geeignete Beispiele für die Monomere (A) seien genannt:
- Methylpolyethylenglykol(meth)acrylat und -(meth)acrylamid, Methylpolypropylenglykol(meth)acrylat und -(meth)acrylamid, Methylpolybutylenglykol(meth)acrylat und -(meth)acrylamid, Methylpoly(propylenoxid-co-ethylenoxid)(meth)acrylat und -(meth)acrylamid, Ethylpolyethylenglykol(meth)acrylat und -(meth)acrylamid, Ethylpolypropylenglykol(meth)acrylat und -(meth)acrylamid, Ethylpolybutylenglykol(meth)acrylat und -(meth)acrylamid und Ethylpoly(propylen-oxid-co-ethylenoxid)(meth)acrylat und -(meth)acrylamid, mit jeweils 3 bis 50, bevorzugt 3 bis 30 und besonders bevorzugt 5 bis 30 Alkylenoxideinheiten, wobei Methylpolyethylenglykolacrylat bevorzugt und Methylpolyethylenglykolmethacrylat besonders bevorzugt ist;
- Ethylenglykolallylether und Methylethylenglykolallylether, Propylenglykolallylether und Methylpropylenglykolallylether mit jeweils 3 bis 50, bevorzugt 3 bis 30 und besonders bevorzugt 5 bis 30 Alkylenoxideinheiten.

Der Anteil der Monomere (A) an den erfindungsgemäßen Copolymeren beträgt 60 bis 99 Gew.-%, bevorzugt 65 bis 90 Gew.-%.

Für die erfindungsgemäß verwendeten Copolymere besonders geeignete Monomere (B) sind die Quatemisierungsprodukte von 1-Vinylimidazolen, von Vinylpyridinen, von (Meth)Acryl-säureestern mit Aminoalkoholen, insbesondere N,N-Di(C₁-C₄-alkyl)amino-C₂-C₆-alkoholen, von aminogruppenhaltigen (Meth)Acrylamiden, insbesondere N,N-Di(C₁-C₄-alkyl)amino-C₂-C₆-alkylamiden von (Meth)Acrylsäure, und von Diallylalkylaminen, insbesondere Diallyl-C₁-C₄-alkylaminen.

Ganz besonders geeignete Monomere (B) weisen die allgemeinen Formel IIa bis IId auf:

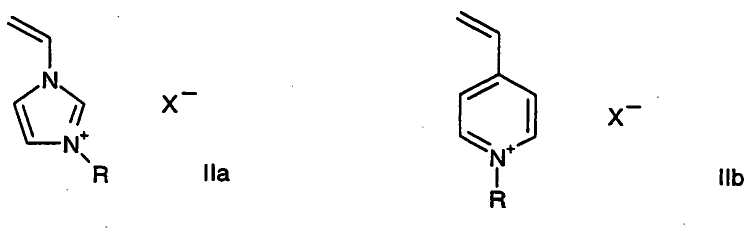

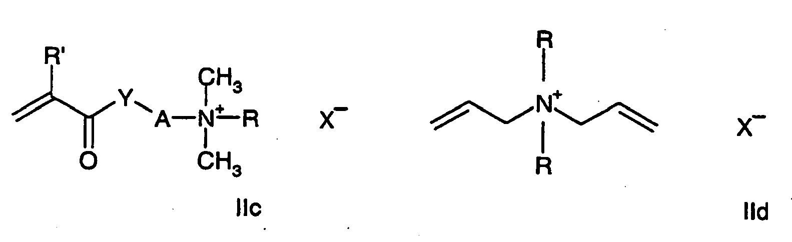

Die Variablen in diesen Formeln haben folgende Bedeutung:
R C₁-C₄-Alkyl oder Benzyl, vorzugsweise Methyl, Ethyl oder Benzyl;
R' Wasserstoff oder Methyl;
Y -O- oder -NH-;
A C₁-C₆-Alkylen, vorzugsweise geradkettiges oder verzweigtes C₂-C₄-Alkylen, insbesondere 1,2-Ethylen, 1,3- und 1,2-Propylen oder 1,4-Butylen;
X- Halogenid, wie Iodid und bevorzugt Chlorid oder Bromid, C₁-C₄-Alkylsulfat, vorzugsweise Methylsulfat oder Ethylsulfat, C₁-C₄-Alkylsulfonat, vorzugsweise Methylsulfonat oder Ethylsulfonat, und C₁-C₄-Alkylcarbonat.

Im einzelnen seien als Beispiele für besonders bevorzugte Monomere (B) genannt:
- 3-Methyl-1-vinylimidazoliumchlorid, 3-Methyl-1-vinylimidazoliummethylsulfat, 3-Ethyl-1-vinylimidazoliumethylsulfat, 3-Ethyl-1-vinylimidazoliumchlorid und 3-Benzyl-1-vinylimidazoliumchlorid;
- 1-Methyl-4-vinylpyridiniumchlorid, 1-Methyl-4-vinylpyridiniummethylsulfat und 1-Benzyl-4-vinylpyridiniumchlorid;
- Methacrylamidopropyltrimethylammoniumchlorid, Methacrylamidoethyltrimethyl-ammoniumchlorid, Trimethylammoniumethylacrylatchlorid und -methylsulfat, Trimethylammoniumethylmethacrylatchlorid und -methylsulfat, Dimethylethylammoniumethylacrylatethylsulfat, Dimethylethylammoniumethylmethacrylatethylsulfat, Trimethylammoniumpropylacrylatchlorid und -methylsulfat und Trimethylammoniumpropylmethacrylatchlorid und -methylsulfat;
- Dimethyldiallylammoniumchlorid und Diethyldiallylammoniumchlorid.

Ganz besonders bevorzugte Monomere (B) sind 3-Methyl-1-vinylimidazoliumchlorid, 3-Methyl-1-vinylimidazoliummethylsulfat, Methacrylamidopropyltrimethylammoniumchlorid, Trimethylammoniumethylmethacrylatchlorid, Dimethylethylammoniumethylmethacrylatethylsulfat und Dimethyldiallylammoniumchlorid.

Die erfindungsgemäßen Copolymere enthalten 1 bis 40 Gew.-%, vorzugsweise 3 bis 30 Gew.-%, Monomer (B).

Vorzugsweise beträgt das Gewichtsverhältnis (A) zu (B) ≥ 2 : 1.

Als optionale Komponente (C) können die erfindungsgemäßen Copolymere anionische monoethylenisch ungesättigte Monomere enthalten.

Geeignete Monomere (C) sind beispielsweise:
- α,β-ungesättigte Monocarbonsäuren, die vorzugsweise 3 bis 6 Kohlenstoffatome aufweisen, wie Acrylsäure, Methacrylsäure, Ethacrylsäure, Crotonsäure und Vinylessigsäure, wobei Acrylsäure und Methacrylsäure bevorzugt sind;
- ungesättigte Dicarbonsäuren, die vorzugsweise 4 bis 6 Kohlenstoffatome aufweisen, wie Itaconsäure und Maleinsäure, deren Anhydride, wie Maleinsäureanhydrid;
- ethylenisch ungesättigte Sulfonsäuren, wie Vinylsulfonsäure, Acrylamidopropansulfonsäure, Methallylsulfonsäure, Methacrylsulfonsäure, m- und p-Styrolsulfonsäure, (Meth)Acrylamidomethansulfonsäure, (Meth)Acrylamidoethansulfonsäure, (Meth)Acrylamidopropansulfonsäure, 2-(Meth)Acrylamido-2-methylpropansulfonsäure, 2-Acrylamido-2-butansulfonsäure, 3-Methacrylamido-2-hydroxypropansulfonsäure, Methansulfonsäureacrylat, Ethansulfonsäureacrylat, Propansulfonsäureacrylat, Allyloxybenzolsulfonsäure, Methallyloxybenzolsulfonsäure und 1-Allyloxy-2-hydroxypropansulfonsäure;
- ethylenisch ungesättigte Phosphonsäuren, wie Vinylphosphonsäure und m- und p-Styrolphosphonsäure;
- saure Phosphatester von C₂-C₄-Alkylenglykolmono(meth)acrylaten und Poly(C₂-C₄-alkylen)glykolmono(meth)acrylaten, wie Ethylenglykolmono(meth)acrylat, Propylenglykolmono(meth)acrylat, Polyethylenglykolmono(meth)acrylaten und Polypropylenglykolmono(meth)acrylaten.

Die anionischen Monomere (C) können als freie Säuren oder in Salzform, vor allem als Alkalimetall- und Ammonium-, insbesondere Alkylammoniumsalze vorliegen, wobei als Salze die Natriumsalze bevorzugt sind.

Bevorzugte Monomere (C) sind Acrylsäure, Methacrylsäure, Maleinsäure, Vinylsulfonsäure, 2-(Meth)Acrylamido-2-methylpropansulfonsäure und Vinylphosphonsäure, wobei Acrylsäure, Methacrylsäure und 2-Acrylamido-2-methylpropansulfonsäure besonders bevorzugt sind.

Der Anteil der Monomere (C) an den erfindungsgemäßen Polymeren kann bis zu 39 Gew.-%, bevorzugt von 3 bis 30 Gew.-%, betragen.

Sind die Monomere (C) in den erfindungsgemäßen Polymeren enthalten, so liegt das Gewichtsverhältnis von (A) zu (C) vorzugsweise bei ≥ 2 : 1.

Als optionale Komponente (D) können die erfindungsgemäßen Copolymere weitere nichtionische monoethylenisch ungesättigte Monomere enthalten.

Geeignete Monomere (D) sind beispielsweise:
- Ester von monoethylenisch ungesättigten C₃-C₆-Carbonsäuren, vor allem Acrylsäure und Methacrylsäure, mit einwertigen C₁-C₂₂-Alkoholen, insbesondere C₁-C₁₆-Alkoholen, sowie Hydroxyalkylester von monoethylenisch ungesättigten C₃-C₆-Carbonsäuren, vor allem Acrylsäure und Methacrylsäure, mit zweiwertigen C₂-C₄-Alkoholen, wie Methyl(meth)acrylat, Ethyl(meth)acrylat, n-Butyl(meth)acrylat, sec.-Butyl(meth)acrylat, tert.-Butyl(meth)acrylat, Ethylhexyl(meth)acrylat, Decyl(meth)-acrylat, Lauryl(meth)acrylat, Isobornyl(meth)acrylat, Cetyl(meth)acrylat, Palmityl-(meth)acrylat und Stearyl(meth)acrylat, Hydroxyethyl(meth)acrylat, Hydroxypropyl-(meth)acrylat und Hydroxybutyl(meth)acrylat;
- Amide von monoethylenisch ungesättigten C₃-C₆-Carbonsäuren, vor allem Acrylsäure und Methacrylsäure, mit C₁-C₁₂-Alkylaminen und Di(C₁-C₄-alkyl)aminen, wie N-Methyl(meth)acrylamid, N,N-Dimethyl(meth)acrylamid, N-Ethyl(meth)acrylamid, N-Propyl(meth)acrylamid, N-tert.-Butyl(meth)acrylamid, N-tert.-Octyl(meth)acrylamid und N-Undecyl(meth)acrylamid, sowie (Meth)Acrylamid;
- Vinylester von gesättigten C₂-C₃₀-Carbonsäuren, insbesondere C₂-C₁₄-Carbonsäuren, wie Vinylacetat, Vinylpropionat, Vinylbutyrat, Vinyl-2-ethylhexanoat und Vinyllaurat;
- Vinyl-C₁-C₃₀-alkylether, insbesondere Vinyl-C₁-C₁₈-alkylether, wie Vinylmethylether, Vinylethylether, Vinyl-n-propylether, Vinylisopropylether, Vinyl-n-butylether, Vinylisobutylether, Vinyl-2-ethylhexylether und Vinyloctadecylether;
- N-Vinylamide und N-Vinyllactame, wie N-Vinylformamid, N-Vinyl-N-methylformamid, N-Vinylacetamid, N-Vinyl-N-methylacetamid, N-Vinylpyrrolidon, N-Vinylpiperidon und N-Vinylcaprolactam;
- aliphatische und aromatische Olefine, wie Ethylen, Propylen, C₄-C₂₄-α-Olefine, insbesondere C₄-C₁₆-α-Olefine, z.B. Butylen, Isobutylen, Diisobuten, Styrol und α-Methylstyrol, sowie auch Diolefine mit einer aktiven Doppelbindung, z.B. Butadien;
- ungesättigte Nitrile, wie Acrylnitril und Methacrylnitril.

Bevorzugte Monomere (D) sind Methyl(meth)acrylat, Ethyl(meth)acrylat, (Meth)Acrylamid, Vinylacetat, Vinylpropionat, Vinylmethylether, N-Vinylformamid, N-Vinylpyrrolidon und N-Vinylcaprolactam.

Sind die Monomere (D) in den erfindungsgemäßen Copolymeren enthalten, so kann ihr Anteil bis zu 30 Gew.-%, betragen.

Die erfindungsgemäßen Copolymere haben ein mittleres Molekulargewicht M_{w} von 2 000 bis 100 000, bevorzugt von 3 000 bis 50 000 und besonders bevorzugt von 3 000 bis 25 000.

Die erfindungsgemäßen Copolymere können durch radikalische Polymerisation der Monomere (A) und (B) sowie gewünschtenfalls (C) und/oder (D) hergestellt werden.

Anstelle der quaternisierten Monomere (B) können auch die entsprechenden tertiären Amine eingesetzt werden. In diesem Fall führt man die Quaternisierung im Anschluß an die Polymerisation durch Umsetzung des erhaltenen Copolymers mit Alkylierungsmitteln, wie Alkylhalogeniden, Dialkylsulfaten und Dialkylcarbonaten, oder Benzylhalogeniden, wie Benzylchlorid, durch. Als Beispiele für geeignete Alkylierungsmittel seien genannt: Methylchlorid, -bromid und -iodid, Ethylchlorid und -bromid, Dimethylsulfat, Diethylsulfat, Dimethylcarbonat und Diethylcarbonat.

Die anionischen Monomere (C) können entweder in Form der freien Säuren oder in partiell oder vollständig mit Basen neutralisierter Form bei der Polymerisation eingesetzt werden. Für die Neutralisation geeignete Basen sind anorganische Basen, wie Alkalimetallhydroxide, Alkalimetallcarbonate und -hydrogencarbonate und Ammoniak, und organische Basen, wie Amine, insbesondere Alkoholamine. Als Beispiele seien im einzelnen aufgeführt: Natronlauge, Kalilauge, Natriumcarbonat, Natriumhydrogencarbonat, Ethanolamin, Diethanolamin und Triethanolamin.

Die radikalische Polymerisation der Monomere kann nach allen bekannten Methoden vorgenommen werden, wobei die Verfahren der Lösungspolymerisation und der Emulsionspolymerisation bevorzugt sind.

Vorteilhaft wird die Polymerisation in Wasser durchgeführt. Es können jedoch auch Mischungen von Wasser und polaren organischen Lösungsmitteln oder polare organische Lösungsmittel allein als Reaktionsmedium verwendet werden.

Beispiele für geeignete organische Lösungsmittel sind aliphatische und cycloaliphatische einwertige Alkohole, wie Methanol, Ethanol, n-Propanol, Isopropanol, n-Butanol, sek.-Butanol, tert.-Butanol, n-Hexanol und Cyclohexanol, mehrwertige Alkohole, z.B. Glykole, wie Ethylenglykol, Propylenglykol und Butylenglykol, und Glycerin, Alkylether mehrwertiger Alkohole, z.B. Methyl- und Ethylether der genannten zweiwertigen Alkohole, Etheralkohole, wie Diethylenglykol, Triethylenglykol und Dipropylenglykol, cyclische Ether, wie Tetrahydrofuran und Dioxan, sowie Ketone, wie Aceton.

Als Polymerisationsinitiatoren eignen sich sowohl thermisch als auch photochemisch (Photoinitiatoren) zerfallende und dabei Radikale bildende Verbindungen.

Unter den thermisch aktivierbaren Polymerisationsinitiatoren sind Initiatoren mit einer Zerfallstemperatur im Bereich von 20 bis 180°C, insbesondere von 50 bis 90°C, bevorzugt. Beispiele für besonders bevorzugte thermische Initiatoren sind anorganische Peroxoverbindungen, wie Peroxodisulfate (Ammonium- und vorzugsweise Natriumperoxodisulfat), Peroxosulfate, Percarbonate und Wasserstoffperoxid; organische Peroxoverbindungen, wie Diacetylperoxid, Di-tert.-butylperoxid, Diamylperoxid, Dioctanoylperoxid, Didecanoylperoxid, Dilauroylperoxid, Dibenzoylperoxid, Bis(o-toloyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylpemeodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat; Azoverbindungen, wie 2,2'-Azobisisobutyronitril, 2,2'-Azobis(2-methylbutyronitril), 2,2'-Azobis(N,N'-dimethylenisobutyramidin)dihydrochlorid und Azobis(2-amidinopropan)dihydrochlorid.

Beispiele für geeignete Photoinitiatoren sind Benzophenon, Acetophenon, Benzoinether, Benzyldialkylketone und deren Derivate.

Die Polymerisationsinitiatoren werden je nach den Anforderungen des zu polymerisierenden Materials üblicherweise in Mengen von 0,01 bis 15 Gew.-%, vorzugsweise 0,5 bis 5 Gew.-%, jeweils bezogen auf die zu polymerisierenden Monomere, eingesetzt und können einzeln oder, zur Ausnutzung vorteilhafter synergistischer Effekte, in Kombination miteinander angewendet werden.

Zur Begrenzung der Molmassen der erfindungsgemäßen Copolymere können bei der Polymerisation übliche Regler, z.B. Mercaptoverbindungen, wie Mercaptoethanol, Thioglycolsäure und Natriumdisulfit, zugesetzt werden. Geeignete Reglermengen liegen im allgemeinen bei 0,01 bis 10 Gew.-%, vorzugsweise 0,1 bis 5 Gew.-%, bezogen auf die zu polymerisierenden Monomere.

Die Polymerisationstemperatur liegt in der Regel bei 10 bis 200°C, vor allem bei 50 bis 100°C.

Die Polymerisation wird vorzugsweise unter atmosphärischem Druck durchgeführt werden. Sie kann jedoch auch in geschlossenem System unter dem sich entwickelnden Eigendruck vorgenommen werden.

Die erfindungsgemäßen Copolymere eignen sich hervorragend zur Dispergierung von Tonmineralien. Bereits durch Zusatz kleinster Mengen der Copolymere (z.B. 0,05 bis 2 Gew.-%, bezogen auf das Tonmineral) können wäßrige Dispersionen von Tonmineralien stabilisiert werden.

Die erfindungsgemäßen Copolymere sind insbesondere als Zusatz für feste und flüssige Waschmittel geeignet. Sie zeichnen sich dabei insbesondere durch folgende vorteilhafte Anwendungseigenschaften aus: Sie dispergieren Schmutzpartikel hervorragend und verhindern so während des Waschens eine Wiederablagerung des Schmutzes auf dem Gewebe. Sie beugen damit einer Vergrauung der Textilien vor. Außerdem verbessern sie die Primärwaschkraft sowohl von flüssigen als auch von festen Waschmitteln. Dies gilt besonders für partikuläre Anschmutzungen, aber auch hydrophobe, öl- und fetthaltige Gewebeanschmutzungen werden leichter entfernt. Insbesondere erdartige Anschmutzungen lassen sich durch Zusatz der erfindungsgemäßen Copolymere leichter entfernen. Zudem lassen sie sich problemlos in feste und flüssige Waschmittelformulierungen einarbeiten. Dabei ist hervorzuheben, daß Stabilität und Homogenität der Flüssigwaschmittel durch die erfindungsgemäßen Copolymere nicht beeinträchtigt werden. Unerwünschte Phasenbildungen und Ausfällungen werden auch bei längerer Lagerung nicht beobachtet.

### Beispiele

### I. Herstellung von erfindungsgemäßen Copolymeren

Die im folgenden angegebenen mittleren Molekulargewichte M_{w} wurden nach der Methode der Größenausschlußchromatographie mit engverteilter linearer Polymaltotriose sowie Maltohexose als Eichstandard bestimmt.

### Copolymer 1

In einem 2 I-Polymerisationsgefäß mit Rührer, Rückflußkühler, Innenthermometer und Tropftrichtern wurden 246,5 g Wasser vorgelegt und nach Spülen mit Stickstoff auf 80°C erhitzt. Dann wurden 568,8 g einer 50 gew.-%igen wäßrigen Lösung von Methylpolyethylenglykolmethacrylat (Mₙ 1000) (Zulauf 1), 34,7 g einer 45 gew.-%igen wäßrigen Lösung von 3-Methyl-1-vinylimidazoliummethylsulfat (Zulauf 2), eine Mischung aus 15 g Mercaptoethanol und 50 g Wasser (Zulauf 3) und eine Initiatormischung aus 6,0 g 2,2'-Azobis-(2-amidinopropan)dihydrochlorid und 80 g Wasser (Zulauf 4) kontinuierlich zugetropft (Zulauf 1, 2 und 3 in 3 h, Zulauf 4 in 4 h). Nach beendeter Initiatorzugabe wurde das Reaktionsgemisch noch 1 h bei 80°C gerührt, dann wurde bei dieser Temperatur nochmals eine Initiatormischung aus 1,5 g 2,2'-Azobis-(2-amidinopropan)dihydrochlorid und 20 g Wasser in einer Portion zugegeben. Nach weiterem zweistündigen Rühren bei 80°C wurden 2,75 g 30 gew.-%iges Wasserstoffperoxid zugegeben und weitere 30 min bei 80°C gerührt. Nach Abkühlen auf Raumtemperatur wurde das Reaktionsgemisch filtriert.

Es wurde eine schwach gelbliche, klare Polymerlösung mit einem Feststoffgehalt von 30,4 Gew.-% und einem pH-Wert von 4,6 erhalten. Das mittlere Molekulargewicht M_{w} des Polymers betrug 4 600.

### Copolymer 2

In einem 2 1-Polymerisationsgefäß mit Rührer, Rückflußkühler, Innenthermometer und Tropftrichtern wurden 239,0 g Wasser vorgelegt und nach Spülen mit Stickstoff auf 80°C erhitzt. Dann wurden 51,5 g einer 50 gew.-%igen wäßrigen Lösung von 2-Acrylamido-2-methylpropansulfonsäure-Natriumsalz (Zulauf 1), 109,9 g einer 45 gew.-%-igen wäßrigen Lösung von 3-Methyl-1-vinylimidazoliummethylsulfat (Zulauf 2), 449,6 g einer 50 gew.-%igen wäßrigen Lösung von Methylpolyethylenglykolmethacrylat (Mₙ 1000) (Zulauf 3), eine Mischung aus 9 g Mercaptoethanol und 50 g Wasser (Zulauf 4) und eine Initiatormischung aus 6,0 g 2,2'-Azobis-(2-amidinopropan)dihydrochlorid und 80 g Wasser (Zulauf 5) kontinuierlich zugetropft (Zulauf 1, 2, 3 und 4 in 3 h, Zulauf 5 in 4 h). Nach beendeter Initiatorzugabe wurde das Reaktionsgemisch noch 1 h bei 80°C gerührt, dann wurde bei dieser Temperatur nochmals eine Initiatormischung aus 1,5 g 2,2'-Azobis-(2-amidinopropan)dihydrochlorid und 20 g Wasser in einer Portion zugegeben. Nach weiterem zweistündigen Rühren bei 80°C wurden 1,65 g 30 gew.-%iges Wasserstoffperoxid zugegeben und weitere 30 min bei 80°C gerührt. Nach Abkühlen auf Raumtemperatur und Filtrieren wurden dem Filtrat 3,6 g einer 10 gew.-%igen Natronlauge zugesetzt.

Es wurde eine schwach gelbliche, klare Polymerlösung mit einem Feststoffgehalt von 30,7 Gew.-% und einem pH-Wert von 6,5 erhalten. Das mittlere Molekulargewicht M_{w} des Polymers betrug 6 100.

### Copolymer 3

In einem 2 I-Polymerisationsgefäß mit Rührer, Rückflußkühler, Innenthermometer und Tropftrichtern wurden 243,7 g Wasser vorgelegt und nach Spülen mit Stickstoff auf 80°C erhitzt. Dann wurden eine Mischung aus 20,7 g Methacrylsäure und 40 g Wasser (Zulauf 1), 64,7 g einer 60 gew.-%igen wäßrigen Lösung von Diallyldimethylammoniumchlorid (Zulauf 2), 480,9 g einer 50 gew.-%igen wäßrigen Lösung von Methylpolyethylenglykolmethacrylat (Mₙ 1000) (Zulauf 3), eine Mischung aus 9 g Mercaptoethanol und 50 g Wasser (Zulauf 4) und eine Initiatormischung aus 6,0 g 2,2'-Azobis-(2-amidinopropan)dihydrochlorid und 80 g Wasser (Zulauf 5) kontinuierlich zugetropft (Zulauf 1, 2, 3 und 4 in 3 h, Zulauf 5 in 4 h). Nach beendeter Initiatorzugabe wurde das Reaktionsgemisch noch 1 h bei 80°C gerührt, dann wurde bei dieser Temperatur nochmals eine Initiatormischung aus 1,5 g 2,2'-Azobis-(2-amidinopropan)dihydrochlorid und 20 g Wasser in einer Portion zugegeben. Nach weiterem zweistündigen Rühren bei 80°C wurden 1,65 g 30 gew.-%iges Wasserstoffperoxid zugegeben und weitere 30 min bei 80°C gerührt. Nach Abkühlen auf Raumtemperatur und Filtrieren wurden dem Filtrat 75 g einer 10 gew.-%igen Natronlauge zugesetzt.

Es wurde eine schwach gelbliche, klare Polymerlösung mit einem Feststoffgehalt von 28,8 Gew.-% und einem pH-Wert von 6,5 erhalten. Das mittlere Molekulargewicht M_{w} des Polymers betrug 9 800.

### Copolymer 4

In einem 2 l-Polymerisationsgefäß mit Rührer, Rückflußkühler, Innenthermometer und Tropftrichtern wurden 197,0 g Wasser vorgelegt und nach Spülen mit Stickstoff auf 80°C erhitzt. Dann wurden 417,9 g einer 50 gew.-%igen wäßrigen Lösung von Methylpolyethylenglykolmethacrylat (Mₙ 1000) (Zulauf 1), 92,1 g einer 50 gew.-%igen wäßrigen Lösung von Methacrylamidopropyltrimethylammoniumchlorid (Zulauf 2), eine Mischung aus 13 g Mercaptoethanol und 50 g Wasser (Zulauf 3) und eine Initiatormischung aus 5,1 g 2,2'-Azobis-(2-amidinopropan)dihydrochlorid und 80 g Wasser (Zulauf 4) kontinuierlich zugetropft (Zulauf 1, 2 und 3 in 3 h, Zulauf 4 in 4 h). Nach beendeter Initiatorzugabe wurde das Reaktionsgemisch noch 1 h bei 80°C gerührt, dann wurde bei dieser Temperatur nochmals eine Initiatormischung aus 1,3 g 2,2'-Azobis-(2-amidinopropan)dihydrochlorid und 20 g Wasser in einer Portion zugegeben. Nach weiterem zweistündigen Rühren bei 80°C wurden 1,95 g 30 gew.-%iges Wasserstoffperoxid zugegeben und weitere 30 min bei 80°C gerührt. Nach Abkühlen auf Raumtemperatur wurde das Reaktionsgemisch filtriert.

Es wurde eine schwach gelbliche, klare Polymerlösung mit einem Feststoffgehalt von 32,7 Gew.-% und einem pH-Wert von 5,6 erhalten. Das mittlere Molekulargewicht M_{w} des Polymers betrug 5 000.

### Copolymer 5

In einem 2 l-Polymerisationsgefäß mit Rührer, Rückflußkühler, Innenthermometer und Tropftrichtern wurden 250,1 g Wasser vorgelegt und nach Spülen mit Stickstoff auf 80°C erhitzt. Dann wurden 51,5 g einer 50 gew.-%igen wäßrigen Lösung von 2-Acrylamido-2-methylpropansulfonsäure-Natriumsalz (Zulauf 1), 54,0 g einer 50 gew.-%igen wäßrigen Lösung von Methacrylamidopropyltrimethylammoniumchlorid (Zulauf 2), 489,8 g einer 50 gew.-%igen wäßrigen Lösung von Methylpolyethylenglykolmethacrylat (Mₙ 1000) (Zulauf 3), eine Mischung aus 9 g Mercaptoethanol und 50 g Wasser (Zulauf 4) und eine Initiatormischung aus 6,0 g 2,2'-Azobis-(2-amidinopropan)dihydrochlorid und 80 g Wasser (Zulauf 5) kontinuierlich zugetropft (Zulauf 1, 2, 3 und 4 in 3 h, Zulauf 5 in 4 h). Nach beendeter Initiatorzugabe wurde noch 1 h bei 80°C gerührt, dann wurde bei dieser Temperatur nochmals eine Initiatormischung aus 1,5 g 2,2'-Azobis-(2-amidinopropan)dihydrochlorid und 20 g Wasser in einer Portion zugegeben. Nach weiterem zweistündigen Rühren bei 80°C wurden 1,65 g 30 gew.-%iges Wasserstoffperoxid zugegeben und weitere 30 min bei 80°C gerührt. Nach Abkühlen auf Raumtemperatur und Filtrieren wurden dem Filtrat 0,8 g einer 10 gew.-%igen Natronlauge zugesetzt.

Es wurde eine schwach gelbliche, klare Polymerlösung mit einem Feststoffgehalt von 30,2 Gew.-% und einem pH-Wert von 6,5 erhalten. Das mittlere Molekulargewicht M_{w} des Polymers betrug 6 500.

### II. Anwendung von erfindungsgemäßen Copolymeren in Waschmitteln

Primär- und Sekundärwaschwirkung der erfindungsgemäßen Copolymere wurden bestimmt.

Für die Waschversuche wurde eine feste Waschmittelformulierung auf Zeolithbasis (WM 1), eine feste Waschmittelformulierung auf Phosphatbasis (WM 3) sowie eine flüssige Waschmittelformulierung (WM 2) verwendet, deren Zusammensetzung in Tabelle 1 wiedergegeben ist. Die Waschbedingungen sind in Tabelle 2 aufgeführt.

**Tabelle 1**

| | WM1 | WM2 | WM3 |
|---|---|---|---|
| Inhaltsstoffe | [Gew.-%] | [Gew.-%] | [Gew.-%] |
| lineares Alkylbenzolsulfonat | 5,0 | | 20,0 |
| C₁₂-C₁₈-Alkylsulfat | | 26,7 | |
| C₁₂-Fettalkoholsulfat x 2 EO | | 7,1 | |
| C₁₃C₁₅-Oxoalkohol x 7 EO | 5,0 | | |
| C₁₂C₁₄-Fettalkohol x 7 EO | | 6,0 | |
| Seife | 1,4 | | |
| Kokosfettsäure | | 5,0 | |
| Kaliumhydroxid | | 1,4 | |
| Natriumcitrat x 2 H₂O | | 2,1 | |
| Zeolith A | 30,0 | | |
| Pentanatriumtriphosphat | | | 20,0 |
| Natriumcarbonat | 12,0 | | 10,0 |
| Natriummetasilikat x 5 H₂O | 3,6 | | 4,5 |
| Dinatriumtetraborat | | 2,2 | |
| Natriumperboratmonohydrat | 20,0 | | |
| Tetraacetylethylendiamin | 6,0 | | |
| Methylpropylglykol | | 10 | |
| Natriumsulfat | 7,0 | | 25,0 |
| Wasser | auf 100 | auf 100 | auf 100 |

**Tabelle 2**

| Waschbedingungen | |
|---|---|
| Gerät | Launder-o-meter der Fa. Atlas, Chicago, USA |
| Waschflotte | 250 ml |
| Waschdauer | 30 min bei 40°C (WM 1 und 2) |
| | 20 min bei 25°C (WM 3) |
| Waschmitteldosierung | 4,0 g/l (WM 1 und 2) |
| | 2,0 g/l (WM 3) |
| Wasserhärte | 3 mmol/l Ca : Mg : HCO₃ 4 : 1 : 8 (WM 1 und 2) |
| | 1 mmol/l Ca : Mg : HCO₃ 4 : 1 : 8 (WM 3) |
| Flottenverhältnis | 1:12,5 |
| Waschcyclen | 1 |
| Copolymerzugabe | 2,5 Gew.-%, bezogen auf das jeweilige WM |
| Prüfgewebe | 5,0 g Baumwollgewebe 221 (gebleicht, Flächengewicht 132 g/m²) |
| | 5,0 g Mischgewebe 768 (65:35 PES:BW, gebleicht, Flächengewicht 155 g/m²) |
| Schmutzgewebe | 10 g Baumwollgewebe 290 (Köperware, gebleicht, Flächengewicht 193 g/m²), |
| | angeschmutzt mit einer 1:1:1-Mischung aus 3 Tonsorten |
| | (Na/Al-Silikatanteil des Schmutzgewebes 4,53 Gew.-%; |
| | Ausgangsremission 17,3%) |
| Tonsorten | Niederahrer rotbrennender Ton 178/RI |
| | Hessischer braunbrennender Manganton 262 |
| | Gelbbrennender Ton 158/G |
| | alle Fa. Jäger KG, Hilgert, Deutschland |

Zur Ermittlung der Primärwaschwirkung wurde der Weißgrad des Schmutzgewebes vor und nach dem Waschen mit einem Photometer der Fa. Datacolor (Elrepho^{®} 2000) anhand der Remission (%) gemessen. Das Primärwaschvermögen ist umso besser, je höher der Remissionswert ist.

Die erhaltenen Ergebnisse sind in Tabelle 3 zusammengestellt.

**Tabelle 3**

| Waschmittel | Zusatz Copolymer (2,5 Gew.-%) | BW 290 |
|---|---|---|
| | | Remission in % |
| | | |
| ungewaschen | | 17,3 |
| | | |
| WM 1 | ohne | 22,1 |
| WM 1 | Copolymer 1 | 24,1 |
| WM 1 | Copolymer 2 | 23,8 |
| WM 1 | Copolymer 3 | 25,6 |
| WM 1 | Copolymer 4 | 25,0 |
| WM 1 | Copolymer 5 | 24,9 |
| | | |
| WM2 | ohne | 21,5 |
| WM 2 | Copolymer 1 | 23,1 |
| WM 2 | Copolymer 2 | 23,3 |
| WM 2 | Copolymer 3 | 24,1 |
| WM 2 | Copolymer 4 | 23,6 |
| WM 2 | Copolymer 5 | 23,8 |
| | | |
| WM 3 | ohne | 18,1 |
| WM 3 | Copolymer 1 | 20,0 |
| WM 3 | Copolymer 2 | 19,7 |
| WM 3 | Copolymer 3 | 20,4 |
| WM 3 | Copolymer 4 | 19,7 |
| WM 3 | Copolymer 5 | 19,6 |

Zur Ermittlung der Sekundärwaschwirkung wurde die Vergrauung der weißen Prüfgewebe durch Weißgradbestimmung vor und nach der Wäsche mit einem Photometer der Fa. Datacolor (Elrepho 2000) anhand der Remission (%) gemessen. Je höher der Abfall im Weißgrad ist, desto stärker ist die Vergrauung des Gewebes und umgekehrt.

Die erhaltenen Ergebnisse sind in Tabelle 4 zusammengestellt.

**Tabelle 4**

| Waschmittel | Zusatz Copolymer (2,5 Gew.-%) | BW 221 | MG 768 |
|---|---|---|---|
| | | Remission in % | Remission in % |
| | | | |
| ungewaschen | | 83,2 | 84,9 |
| | | | |
| WM 1 | ohne | 51,3 | 57,4 |
| WM 1 | Copolymer 1 | 55,6 | 60,0 |
| WM 1 | Copolymer 2 | 54,8 | 59,5 |
| WM 1 | Copolymer 3 | 56,78 | 60,8 |
| WM 1 | Copolymer 4 | 55,9 | 59,4 |
| WM 1 | Copolymer 5 | 54,5 | 58,9 |
| | | | |
| WM 2 | ohne | 42,6 | 54,6 |
| WM 2 | Copolymer 1 | 48,3 | 58,3 |
| WM 2 | Copolymer 2 | 47,5 | 57,0 |
| WM 2 | Copolymer 3 | 49,4 | 58,3 |
| WM 2 | Copolymer 4 | 48,4 | 57,7 |
| WM 2 | Copolymer 5 | 47,4 | 57,7 |
| | | | |
| WM 3 | ohne | 52,9 | 54,6 |
| WM 3 | Copolymer 1 | 59,2 | 59,7 |
| WM 3 | Copolymer 2 | 58,2 | 59,1 |
| WM 3 | Copolymer 3 | 60,3 | 58,9 |
| WM 3 | Copolymer 4 | 58,0 | 55,7 |
| WM 3 | Copolymer 5 | 59,0 | 59,0 |

## Patentansprüche

1. Verwendung von Copolymeren, die
(A) 60 bis 99 Gew.-% mindestens eines monoethylenisch ungesättigten Polyalkylenoxidmonomers der allgemeinen Formel I 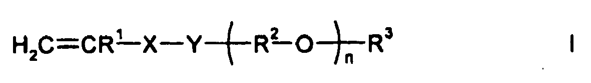 in der die Variablen folgende Bedeutung haben:
X -CH₂- oder -CO-, wenn Y für -O- steht;
-CO-, wenn Y für -NH- steht;
Y -O- oder -NH-;
R¹ Wasserstoff oder Methyl;
R² gleiche oder verschiedene C₂-C₆-Alkylenreste, die blockweise oder statistisch angeordnet sein können;
R³ Wasserstoff oder C₁-C₄-Alkyl;
n eine ganze Zahl von 3 bis 50,
(B) 1 bis 40 Gew.-% mindestens eines quaternisierten stickstoffhaltigen monoethylenisch ungesättigten Monomers,
(C) 0 bis 39 Gew.-% anionischer monoethylenisch ungesättigter Monomere und
(D) 0 bis 30 Gew.-% anderer nichtionischer monoethylenisch ungesättigter Monomere
einpolymerisiert enthalten und ein mittleres Molekulargewicht M_{w} von 2 000 bis 100 000 aufweisen, als Dispergiermittel für Tonmineralien.

2. Verwendung von Copolymeren nach Anspruch 1, die als Monomer (A) mindestens ein Monomer der Formel I einpolymerisiert enthalten, in der die Variablen folgende Bedeutung haben:
X -CO- oder -CH₂-;
Y -O-;
R¹ Wasserstoff oder Methyl;
R² Ethylen, Propylen oder Mischungen davon;
R³ Methyl;
n eine ganze Zahl von 5 bis 30.

3. Verwendung von Copolymeren nach Anspruch 1 oder 2, die als Monomer (B) mindestens eines der Monomere der allgemeinen Formel IIa bis IId 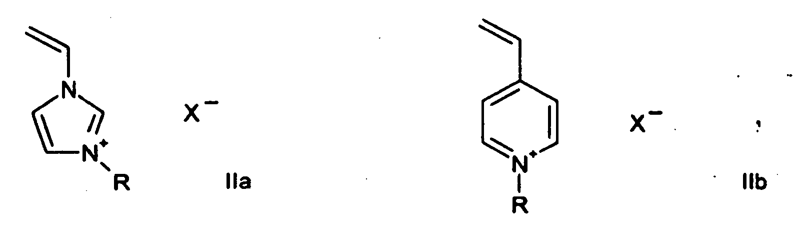 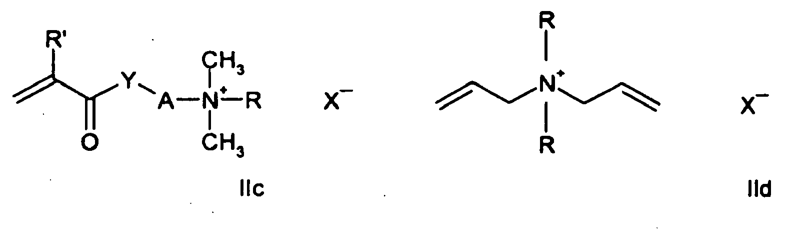 in der die Variablen folgende Bedeutung haben:
R C₁-C₄-Alkyl oder Benzyl;
R' Wasserstoff oder Methyl;
Y -O- oder -NH-;
A C₁-C₆-Alkylen;
X- Halogenid, C₁-C₄-Alkylsulfat, C₁-C₄-Alkylsulfonat und C₁-C₄-Alkylcarbonat,
einpolymerisiert enthalten.

4. Verwendung von Copolymeren nach den Ansprüchen 1 bis 3, die 60 bis 98 Gew.-% Monomer (A),
1 bis 39 Gew.-% Monomer (B) und 1 bis 39 Gew.-% Monomer (C) einpolymerisiert enthalten.

5. Verwendung von Copolymeren nach den Ansprüchen 1 bis 4, bei denen das Gewichtsverhältnis von (A) zu (B) ≥ 2 : 1 und für den Fall, daß die Copolymere ein Monomer (C) einpolymerisiert enthalten, auch das Gewichtsverhältnis (A) zu (C) ≥ 2 : 1 beträgt.

6. Copolymere, die
(A) 60 bis 99 Gew.-% mindestens eines monoethylenisch ungesättigten Polyalkylenoxidmonomers der allgemeinen Formel I 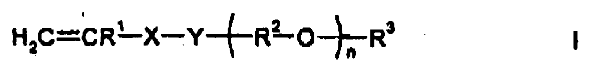 in der die Variablen folgende Bedeutung haben:
X -CH₂- oder -CO-, wenn Y für -O- steht; -CO-, wenn Y für -NH- steht;
Y -O- oder -NH-;
R¹ Wasserstoff oder Methyl;
R² gleiche oder verschiedene C₂-C₆-Alkylenreste, die blockweise oder statistisch angeordnet sein können;
R³ Wasserstoff oder C₁-C₄-Alkyl;
n eine ganze Zahl von 3 bis 50,
(B) 1 bis 40 Gew.-% mindestens eines quaternisierten stickstoffhaltigen monoethylenisch ungesättigten Monomers, das ausgewählt ist unter Monomeren (B) der allgemeinen Formel IIa oder IIb; 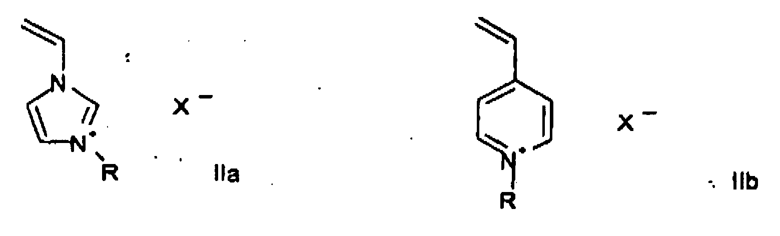 worin die Variablen folgende Bedeutung haben:
R C₁-C₄-Alkyl oder Benzyl, vorzugsweise Methyl, Ethyl oder Benzyl;
X- Halogenid, wie Iodid und bevorzugt Chlorid oder Bromid, C₁-C₄-Alkylsulfat, vorzugsweise Methylsulfat oder Ethylsulfat, C₁-C₄-Alkylsulfonat, vorzugsweise Methylsulfonat oder Ethylsulfonat, und C₁-C₄-Alkylcarbonat.
und folgendem Monomer (B):
- Methacrylamidoethyltrimethyl-ammoniumchlorid,
(C) 0 bis 39 Gew.-% anionischer monoethylenisch ungesättigter Monomere und
(D) 0 bis 30 Gew.-% anderer nichtionischer monoethylenisch ungesagter Monomere
einpolymerisiert enthalten und ein mittleres Molekulargewicht M_{w} von 2 000 bis 100 000 aufweisen,
oder
(A) 60 bis 99 Gew.-% mindestens eines monoethylenisch ungesättigten Polyalkylenoxidmonomers der allgemeinen Formel I 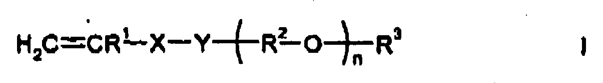 in der die Variablen folgende Bedeutung haben:
X -CH₂-, wenn Y für -O- steht; -CO-, wenn Y für -NH- steht;
Y -O- oder -NH-;
R¹ Wasserstoff oder Methyl;
R² gleiche oder verschiedene C₂-C₆-Alkylenreste, die blockweise oder statistisch angeordnet sein können;
R³ Wasserstoff oder C₁-C₄-Alkyl;
n eine ganze Zahl von 3 bis 50,
(B) 1 bis 40 Gew.-% mindestens eines quaternisierten stickstoffhaltigen monoethylenisch ungesättigten Monomers, das ausgewählt ist unter Monomeren (B) der allgemeinen Formel IIa oder IIb: 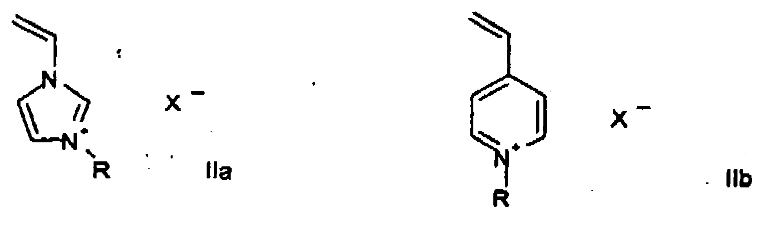 worin die Variablen folgende Bedeutung haben:
R C₁-C₄-Alkyl oder Benzyl, vorzugsweise Methyl, Ethyl oder Benzyl;
X- Halogenid, wie Iodid und bevorzugt Chlorid oder Bromid, C₁-C₄-Alkylsulfat, vorzugsweise Methylsulfat oder Ethylsulfat, C₁-C₄-Alkylsulfonat, vorzugsweise Methylsulfonat oder Ethylsulfonat, und C₁-C₄-Alkylcarbonat.
und folgenden Monomeren (B):
- Methacrylamidoethyltrimethyl-ammoniumchlorid, Trimethylammoniumethylacrylatchlorid und -methylsulfat, Trimethylammoniumethylmethacrylatchlorid und-methylsulfat. Dimethylethylammoniumethylacrylatethylsulfat, Dimetriytethylammoniumethylmethacrylatethylsulfat, Trimethylammoniumpropylacrylatmethylsulfat und Trimethylammoniumpropylmethacrylatmethylsulfat;
- Diethyldiallylammoniumchlorid.
(C) 0 bis 39 Gew.-% anionischer monoethylenisch ungesättigter Monomer und
(D) 0 bis 30 Gew.-% anderer nichtionischer monoethylenisch ungesättigter Monomere
einpolymerisiert enthalten und ein mittleres Molekulargewicht M_{w} von 2 000 bis 100 000 aufweisen.

## Claims

1. The use of copolymers which comprise, in copolymerized form,
(A) 60 to 99% by weight of at least one monoethylenically unsaturated polyalkylene oxide monomer of the formula I 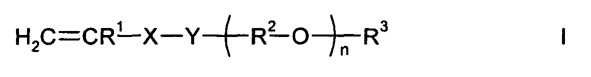 in which the variables have the following meanings:
X is -CH₂- or -CO-, if Y is -O-; is -CO-, if Y is -NH-;
Y is -O- or -NH-;
R¹ is hydrogen or methyl;
R² are identical or different C₂-C₆-alkylene radicals, which may be arranged blockwise or randomly;
R³ is hydrogen or C₁-C₄-alkyl;
n is an integer from 3 to 50,
(B) 1 to 40% by weight of at least one quaternized nitrogen-containing monoethylenically unsaturated monomer,
(C) 0 to 39% by weight of anionic monoethylenically unsaturated monomers and
(D) 0 to 30% by weight of other nonionic monoethylenically unsaturated monomers
and have an average molecular weight M_{w} of from 2000 to 100 000, as dispersants for clay minerals.

2. The use of copolymers according to claim 1, which comprise, in copolymerized form, as monomer (A), at least one monomer of the formula I in which the variables have the following meanings:
X is -CO- or -CH₂-;
Y is -O-;
R¹ is hydrogen or methyl;
R² is ethylene, propylene or mixtures thereof;
R³ is methyl;
n is an integer from 5 to 30.

3. The use of copolymers according to claim 1 or 2, which comprise, in copolymerized form, as monomer (B), at least one of the monomers of the formula IIa to IId 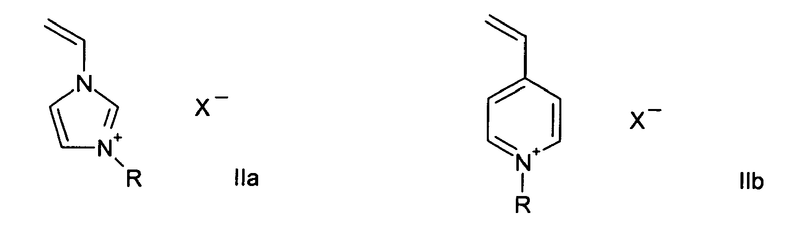 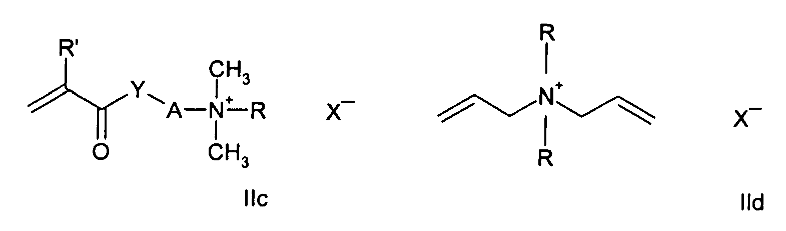 in which the variables have the following meanings:
R is C₁-C₄-alkyl or benzyl;
R' is hydrogen or methyl;
Y is -O- or -NH-;
A is C₁-C₆-alkylene;
X⁻ is halide, C₁-C₄-alkyl sulfate, C₁-C₄-alkylsulfonate and C₁-C₄-alkyl carbonate.

4. The use of copolymers according to claims 1 to 3, which comprise, in copolymerized form, 60 to 98% by weight of monomer (A), 1 to 39% by weight of monomer (B) and 1 to 39% by weight of monomer (C).

5. The use of copolymers according to claims 1 to 4, in which the weight ratio of (A) to (B) is ≥ 2:1 and for the case where the copolymers comprise a monomer (C) in copolymerized form, the weight ratio of (A) to (C) is also ≥ 2:1.

6. A copolymer which comprises, in copolymerized form,
(A) 60 to 99% by weight of at least one monoethylenically unsaturated polyalkylene oxide monomer of the formula I 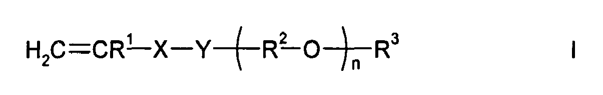 in which the variables have the following meanings:
X is -CH₂- or -CO-, if Y is -O-; is -CO-, if Y is -NH-;
Y is -O- or -NH-;
R¹ is hydrogen or methyl;
R² are identical or different C₂-C₆-alkylene radicals, which may be arranged blockwise or randomly;
R³ is hydrogen or C₁-C₄-alkyl;
n is an integer from 3 to 50,
(B) 1 to 40% by weight of at least one quaternized nitrogen-containing monoethylenically unsaturated monomer, selected from monomers (B) of the general formula IIa or IIb: 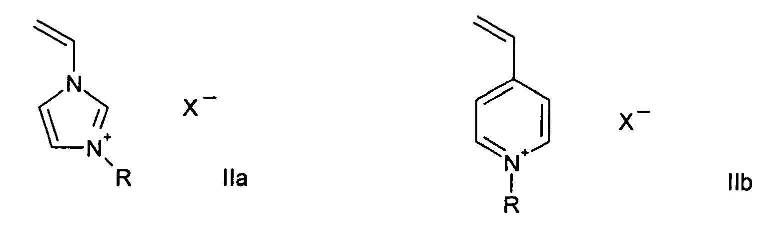 in which the variables have the following meanings:
R is C₁-C₄-alkyl or benzyl, preferably methyl, ethyl or benzyl;
X⁻ is halide, such as iodide and preferably chloride or bromide, C₁-C₄-alkyl sulfate, preferably methyl sulfate or ethyl sulfate, C₁-C₄-alkylsulfonate, preferably methylsulfonate or ethylsulfonate, and C₁-C₄-alkylcarbonate
and the following monomer (B):
- methacrylamidoethyltrimethylammonium chloride,
(C) 0 to 39% by weight of anionic monoethylenically unsaturated monomers and
(D) 0 to 30% by weight of other nonionic monoethylenically unsaturated monomers
and has an average molecular weight M_{w} of from 2000 to 100 000,
or
(A) 60 to 99% by weight of at least one monoethylenically unsaturated polyalkylene oxide monomer of the formula I 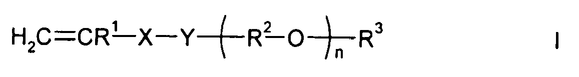 in which the variables have the following meanings:
X is -CH₂-, if Y is -O-; is -CO-, if Y is -NH-;
Y is -O- or -NH-;
R¹ is hydrogen or methyl;
R² are identical or different C₂-C₆-alkylene radicals, which may be arranged blockwise or randomly;
R³ is hydrogen or C₁-C₄-alkyl;
n is an integer from 3 to 50,
(B) 1 to 40% by weight of at least one quaternized nitrogen-containing monoethylenically unsaturated monomer, selected from monomers (B) of the general formula IIa or IIb: 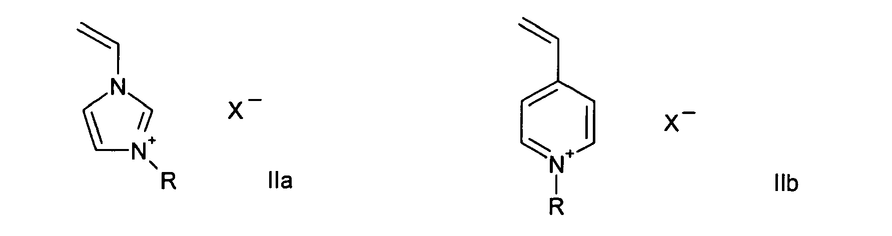 in which the variables have the following meanings:
R is C₁-C₄-alkyl or benzyl, preferably methyl, ethyl or benzyl;
X⁻ is halide, such as iodide and preferably chloride or bromide, C₁-C₄-alkyl sulfate, preferably methyl sulfate or ethyl sulfate, C₁-C₄-alkylsulfonate, preferably methylsulfonate or ethylsulfonate, and C₁-C₄-alkylcarbonate
and the following monomers (B):
- methacrylamidoethyltrimethylammonium chloride, trimethylammonium ethyl acrylate chloride and methyl sulfate, trimethylammonium ethyl methacrylate chloride and methyl sulfate, dimethylethylammonium ethyl acrylate ethyl sulfate, dimethylethylammonium ethyl methacrylate ethyl sulfate, trimethylammonium propyl acrylate methyl sulfate and trimethylammonium propyl methacrylate methyl sulfate;
- diethyldiallylammonium chloride
(C) 0 to 39% by weight of anionic monoethylenically unsaturated monomers and
(D) 0 to 30% by weight of other nonionic monoethylenically unsaturated monomers
and has an average molecular weight M_{w} of from 2000 to 100 000.

## Revendications

1. Utilisation de copolymères, qui contiennent à l'état polymérisé :
(A) 60 à 99 % en poids d'au moins un monomère d'oxyde de polyalkylène monoéthyléniquement insaturé de formule générale I 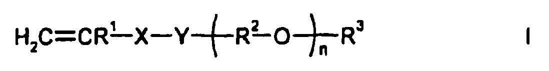 dans laquelle les variables ont la signification suivante :
X -CH₂- ou -CO-, quand Y représente -O- ; -CO-, quand Y représente -NH- ;
Y -O- ou -NH- ;
R¹ hydrogène ou méthyle ;
R² radicaux alkylène en C₂-C₆ identiques ou différents, qui peuvent être disposés en blocs ou de manière statistique ;
R³ hydrogène ou alkyle en C₁-C₄ ;
n un nombre entier de 3 à 50,
(B) 1 à 40 % en poids d'au moins un monomère monoéthyléniquement insaturé quaternisé contenant de l'azote,
(C) 0 à 39 % en poids de monomères anioniques monoéthyléniquement insaturés et
(D) 0 à 30 % en poids d'autres monomères non ioniques monoéthyléniquement insaturés
et qui présentent un poids moléculaire moyen M_{w} de 2000 à 100 000, en tant qu'agents de dispersion pour des minéraux argileux.

2. Utilisation de copolymères selon la revendication 1, qui contiennent à l'état polymérisé en tant que monomère (A) au moins un monomère de formule I, dans laquelle les variables ont la signification suivants :
X -CO- ou -CH₂- ;
Y -O- ;
R¹ hydrogène ou méthyle ;
R² éthylène, propylène ou leurs mélanges ;
R³ méthyle ;
n un nombre entier de 5 à 30.

3. Utilisation de copolymères selon la revendication 1 ou 2, qui contiennent à l'état polymérisé en tant que monomère (B) au moins un des monomères des formules générales IIa à IId : 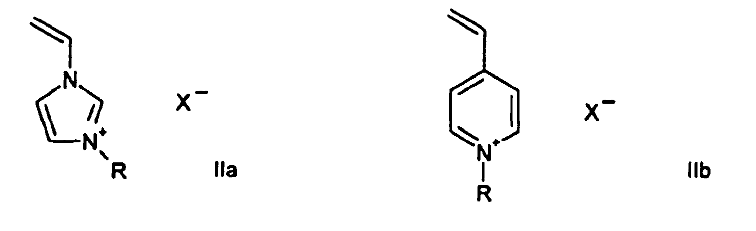 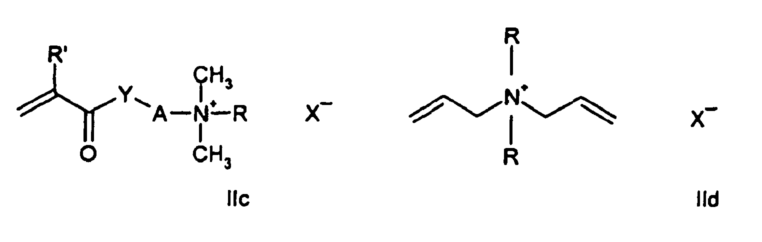 dans lesquelles les variables ont la signification suivante :
R alkyle en C₁-C₄ ou benzyle ;
R' hydrogène ou méthyle ;
Y -O- ou -NH- ;
A alkylène en C₁-C₆ ;
X- halogénure, alkylsulfate en C₁-C₄, alkylsulfonate en C₁-C₄ et alkylcarbonate en C₁-C₄.

4. Utilisation de copolymères selon l'une quelconque des revendications 1 à 3, qui contiennent à l'état polymérisé 60 à 98 % en poids de monomère (A), 1 à 39 % en poids de monomère (B) et 1 à 39 % en poids de monomère (C).

5. Utilisation de copolymères selon l'une quelconque des revendications 1 à 4, dans lesquels le rapport en poids de (A) sur (B) ≥ 2:1 et, dans le cas où les copolymères contiennent à l'état polymérisé un monomère (C), le rapport en poids de (A) sur (C) est aussi ≥ 2:1.

6. Copolymères, qui contiennent à l'état polymérisé :
(A) 60 à 99 % en poids d'au moins un monomère d'oxyde de polyalkylène monoéthyléniquement insaturé de formule générale I 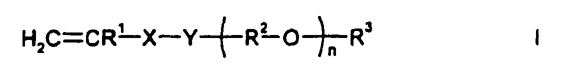 dans laquelle les variables ont la signification suivants :
X -CH₂- ou -CO-, quand Y représente -O- ; -CO-, quand Y représente -NH- ;
Y -O- ou -NH- ;
R¹ hydrogène ou méthyle ;
R² radicaux alkylène en C₂-C₆ identiques ou différents, qui peuvent être disposés en blocs ou de manière statistique ;
R³ hydrogène ou alkyle en C₁-C₄ ;
n un nombre entier de 3 à 50,
(B) 1 à 40 % en poids d'au moins un monomère quaternisé monoéthyléniquement insaturé contenant de l'azote, qui est sélectionné parmi des monomères (B) des formules générales IIa ou IIb : 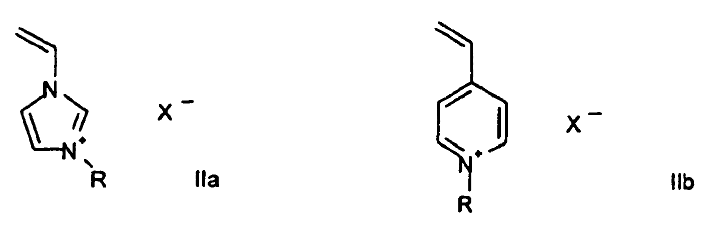 dans lesquelles les variables ont la signification suivants :
R alkyle en C₁-C₄ ou benzyle, de préférence méthyle, éthyle ou benzyle ;
X- halogénure, comme iodure et de manière préférée chlorure ou bromure, alkylsulfate en C₁-C₄, de préférence méthylsulfate ou éthylsulfate, alkylsulfonate en C₁-C₄, de préférence méthylsulfonate ou éthylsulfonate, et alkylcarbonate en C₁-C₄,
et le monomère (B) suivait :
- chlorure de méthacrylamidoéthyltriméthyl-ammonium
(C) 0 à 39 % en poids de monomères anioniques monoéthyléniquement insaturés et
(D) 0 à 30 % en poids d'autres monomères non ioniques monoéthyléniquement insaturés
et qui présentent un poids moléculaire moyen M_{w} de 2000 à 100 000
ou
(A) 60 à 99 % en poids d'au moins un monomère d'oxyde de polyalkylène monoéthyléniquement insaturé de formule générale I 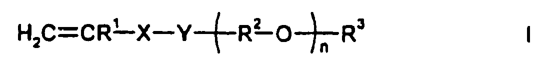 dans laquelle les variables ont la signification suivants :
X -CH₂-, quand Y représente -O- ; -CO-, quand Y représente -NH- ;
Y -O- ou -NH- ;
R¹ hydrogène ou méthyle ;
R² radicaux alkylène en C₂-C₆ identiques ou différents, qui peuvent être disposés en blocs ou de manière statistique ;
R³ hydrogène ou alkyle en C₁-C₄ ;
n un nombre entier de 3 à 50,
(B) 1 à 40 % en poids d'au moins un monomère quaternisé monoéthyléniquement insaturé contenant de l'azote, qui est sélectionné parmi des monomères (B) des formules générales IIa ou IIb : 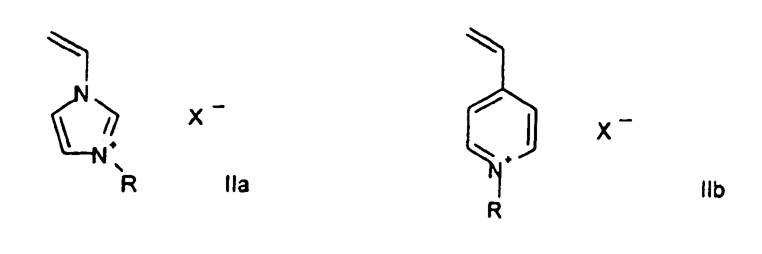 dans lesquelles les variables ont la signification suivants :
R alkyle en C₁-C₄ ou benzyle, de préférence méthyle, éthyle ou benzyle ;
X- halogénure, comme iodure et de manière préférée chlorure ou bromure, alkylsulfate en C₁-C₄, de préférence méthylsulfate ou éthylsulfate, alkylsulfonate en C₁-C₄, de préférence méthylsulfonate ou éthylsulfonate, et alkylcarbonate en C₁-C₄,
et des monomères (B) suivante:
- chlorure de méthacrylamidoéthyltriméthyl-ammonium, chlorure de triméthylammoniuméthylacrylate et méthylsulfate de triméthylammoniuméthylacrylate, chlorure de triméthylammoniuméthylméthacrylate et méthylsulfate de triméthylammoniuméthylméthacrylate, éthylsulfate de diméthyléthylammoniuméthylacrylate, éthylsulfate de diméthyléthylammoniuméthylméthacrylate, méthylsulfate de triméthylammoniumpropylacrylate et méthylsulfate de triméthylammoniumpropylméthacrylate ;
- chlorure de diéthyldiallylammonium.
(C) 0 à 39 % en poids de monomères anioniques monoéthyléniquement insaturés et
(D) 0 à 30 % en poids d'autres monomères non ioniques monoéthyléniquement insaturés
et qui présentent un poids moléculaire moyen M_{w} de 2000 à 100 000.
